# EUROPÄISCHE PATENTSCHRIFT

(11) **EP 1 264 996 B1**
(45) Veröffentlichungstag und Bekanntmachung des Hinweises auf die Patenterteilung: **09.11.2005**
(21) Anmeldenummer: 02020225.5
(22) Anmeldetag: 09.10.2000
(51) Int. Cl.: F16B 39/26, F16B 43/00, F16B 39/10

(54) **Befestigungselement mit unverlierbar daran befestigbarer Unterlegscheibe**
Fastening element with attachable captive washer
Elément de fixation comprenant une rondelle imperdable attachable

(30) Priorität: 08.10.1999 DE 19948868
(43) Veröffentlichungstag der Anmeldung: 11.12.2002
(62) Teilanmeldung aus: 00121955.9
(73) Patentinhaber: TEXTRON VERBINDUNGSTECHNIK GmbH & Co. OHG, 56567 Neuwied (DE)
(72) Erfinder: Diener, Frank-Uwe, 78532 Tuttlingen (DE)
(74) Vertreter: Beck, Alexander

(56) Entgegenhaltungen:
- DE-C- 528 400
- US-A- 1 882 089
- US-A- 2 151 919
- ROSSI P J: "UNITIZED NUT-AND-WASHER ASSEMBLY A PROPOSED FASTENER WOULD BE NONSCRATCHING AND EASY TO INSTALL" NTIS TECH NOTES, US DEPARTMENT OF COMMERCE. SPRINGFIELD, VA, US, 1. November 1986 (1986-11-01), Seite 1226 XP002003875 ISSN: 0889-8464

## Beschreibung

Die Erfindung betrifft ein Befestigungselement mit unverlierbar daran befestigbarer Unterlegscheibe (US 2 151 919 A).

Aus der DE-GM 94 00 671 ist eine Aussenscheibenbundmutter bekannt, an der eine Unterlegscheibe unverlierbar befestigt ist. Der Mutternkörper weist einen Aussenflansch auf, der von einem an der Unterlegscheibe angeformten Ringsteg umfasst wird. Die Unterlegscheibe ist damit zwar drehbar, aber unlösbar mit der Scheibe verbunden.

Diese sogenannten Scheibenmuttern sind aufwendig zu fertigen, da eine Verformung des vollständigen Scheibenaussenumfangs notwendig ist. Ausserdem treten Nachteile auf, wenn Scheibe und Mutter beschichtet oder gewachst werden sollen, da sich überschüssiges Beschichtungsmedium im Bereich des Ringstegs sammelt und nicht abfliessen kann.

Des weiteren sind aus dem Stand der Technik Unterlegscheiben mit angeformten Haltekrallen bekannt. Hierbei dienen die Haltekrallen jedoch nicht der unverlierbaren Haltung der Unterlegscheiben an den Befestigungselementen, sondern sollen vielmehr eine Verdrehung zwischen Unterlegscheibe und Befestigungselement verhindern. Solche Unterlegscheiben gemäss dem Stand der Technik dienen also der Losdrehsicherung des Befestigungselementes. Solche Unterlegscheiben sind beispielsweise aus der FR-A-910 334, der US-A-1 374 054 und der GB-A-208 626 bekannt.

Ausgehend von diesem Stand der Technik ist es Aufgabe der vorliegenden Erfindung, ein Befestigungselement mit unverlierbar daran befestigbarer Unterlegscheibe zu schaffen, wobei die Unterlegscheibe sehr leicht montier- und demontierbar sein soll und sich eben gerade nicht mit dem Befestigungselement mitdrehen soll.

Erfindungsgemäss wird diese Aufgabe durch ein Befestigungselement mit unverlierbar daran befestigbarer Unterlegscheibe gemäß Anspruch 1 gelöst.

Die erfindungsgemässe, unverlierbar an einem Befestigungselement befestigbare Unterlegscheibe weist mindestens zwei, vorzugsweise drei oder auch mehr Haltekrallen auf, die sich im wesentlichen radial nach aussen erstrecken. Die Haltekrallen sind so verformbar, dass sie zur Befestigung der Unterlegscheibe am Befestigungselement um einen am Befestigungselement angeordneten Flansch umlegbar sind.

Die erfindungsgemässe Kombination aus Befestigungselement und Scheibe ist leicht herstellbar, da eine Ausstanzung der Scheibe einschliesslich Haltekrallen möglich ist. Die Haltekrallen können dann einfach um den Flansch des Befestigungselementes herumgelegt werden. Eine komplizierte Aufformung eines Ringstegs ist nicht mehr notwendig. Falls erforderlich kann die am Befestigungselement befestigte Unterlegscheibe leicht durch Aufbiegen der Haltekrallen entfernt werden.

Ein weiterer entscheidender Vorteil der erfindungsgemässen Kombination aus Befestigungselement und Unterlegscheibe mit Haltekrallen ist, dass beim Beschichten des Befestigungselements und der Scheibe mit Lacken, Ölen oder Wachsen und anschliessendem Abschleudern des Beschichtungsmediums das überschüssige Medium besser abläuft. Anhäufungen des Beschichtungsmediums werden verhindert.

Mit dem Befestigungselement, das insbesondere eine Mutter oder ein Schraubbolzen sein kann, lässt sich ein Bauteil durch Verschraubung befestigen. Die unverlierbar am Befestigungselement durch die Haltekrallen angebrachte Unterlegscheibe gerät dabei im Laufe des Schraubvorganges in Anlage zu einer Gegenfläche am Bauteil. Die Unterlegscheibe ist dabei durch die Haltekrallen so am Befestigungselement gesichert, dass sie sich je nach Reibwert zwischen Befestigungselement und Unterlegscheibe, bzw. Gegenfläche und Unterlegscheibe auch gegen das Befestigungselement verdrehen kann.

Die Haltekrallen sind vorzugsweise am äusseren Rand der Unterlegscheibe angeformt.

Der Biegebereich der Haltekrallen kann aber auch innerhalb des Scheibenradius liegen, so dass sich die Unterlegscheibe zumindest in Teilbereichen über den Aussenradius des Befestigungselements, also des Mutternkörpers oder des Bolzenkopfes, erstreckt. Dadurch wird erreicht, dass das vom Befestigungselement auf die Scheibe übertragene Drehmoment bei Anlage der Scheibe an die Gegenfläche zu gering ist, als dass die Schreibe vom Befestigungselement mitgedreht werden könnte. Eine Beschädigung der Anlagefläche der Scheibe an einem Bauteil, das mit dem Befestigungselement befestigt wird, wird damit verhindert.

Um den Reibwert zwischen Scheibe und Anlagefläche am Bauteil zu erhöhen, kann es vorteilhaft sein, Ausklinkungen innerhalb der Unterlegscheibe vorzusehen. Diese Ausklinkungen ragen in Richtung der Anlagefläche nach unten aus der Unterlegscheibe heraus. Gerät die Scheibe in Anlage mit der Gegenfläche, bleibt die Scheibe auch bei Anlageflächen mit geringem Reibbeiwert stehen. Bei weiterem Anziehen des Befestigungselements dreht sich das Befestigungselement gegenüber der Scheibe. Die Ausklinkungen sind federnd und planieren sich mit wachsender Vorspannkraft. Es steht dem Befestigungselement die komplette Anlagefläche der Scheibe zur Verfügung.

Die Ausklinkungen sind vorzugsweise am inneren und/oder am äusseren Umfang der Scheibe angeordnet. Die Ausklinkungen können insbesondere rechteckig oder sägezahnförmig sein.

Ausstanzungen sind innerhalb der Scheibe vorgesehen .Die Ausstanzungen können vor den Ausklinkungen angeordnet sein. Es können aber auch insbesondere kreisförmige oder ovale Ausstanzungen im Scheibeninneren vorgesehen sein. Durch sich bei der Ausstanzung aufformende Grate der Ausstanzung wird ein ähnlicher Effekt erzielt wie mit den Ausklinkungen.

Die Erfindung wird im folgenden näher anhand der beigefügten Abbildungen erläutert:
**Fig. 1** zeigt eine mit Haltekrallen in Draufsicht;
**Fig. 2** zeigt eine Unterlegscheibe, die an einem Schraubbolzen befestigt ist, im Schnitt;
**Fig. 3** zeigt eine Unterlegscheibe, die an einer Schraubmutter befestigt ist, im Schnitt;
**Fig. 4** zeigt eine Unterlegscheibe mit Haltekrallen und Ausklinkungen in Draufsicht;
**Fig. 5** zeigt eine Unterlegscheibe mit Haltekrallen, Ausklinkungen und Ausstanzungen in Draufsicht;
**Fig. 6** zeigt eine Unterlegscheibe mit Haltekrallen, sägezahnförmigen Ausklinkungen und Ausstanzungen in Draufsicht;
**Fig. 7** zeigt eine erfindungsgemässe Unterlegscheibe mit Haltekrallen und kreisförmigen Ausstanzungen in Draufsicht.

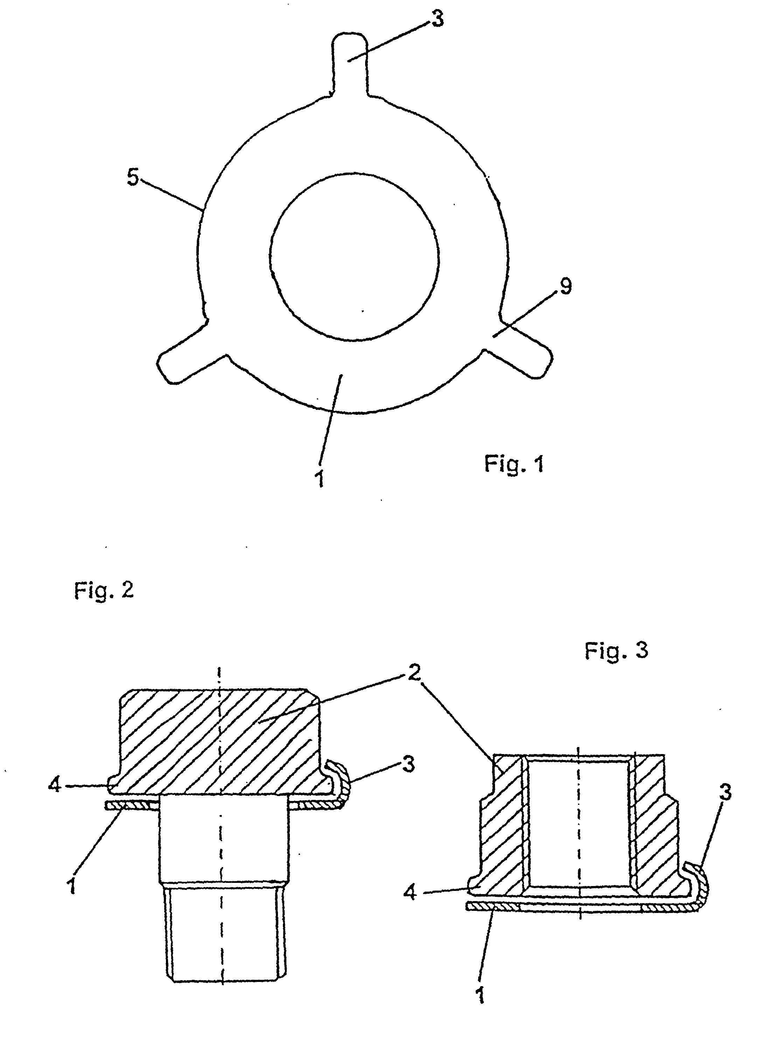

Die in Fig. 1 abgebildete Unterlegscheibe 1 weist im wesentlichen den Durchmesser eines am zugehörigen Befestigungselement 2 angeordneten Flansches 4 auf. Die Unterlegscheibe 1 verfügt über am äusseren Rand angeformte Haltekrallen 3, die so verformbar sind, dass sie um den Flansch 4 am Befestigungselement 2 umgelegt werden können.

Fig. 2 zeigt einen Schraubbolzen 2, der über einen umlaufenden Ringflansch 4 verfügt. Die Unterlegscheibe 1 lässt sich so am Schraubbolzen 2 befestigen, dass die Haltekrallen 3 um den Flansch 4 herumgelegt werden können. Die Unterlegscheibe 1 ist damit unverlierbar, aber drehbar mit dem Schraubbolzen 2 verbunden.

Fig. 3 zeigt den entsprechenden Schnitt durch eine Schraubmutter 2 mit Ringflansch 4.

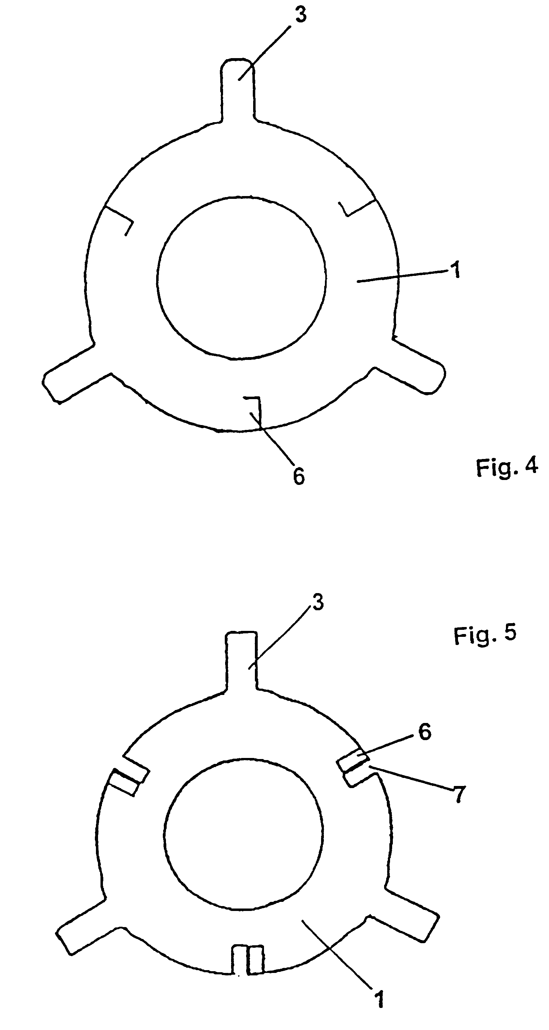

In Fig. 4 ist eine Unterlegscheibe 1 dargestellt, die zusätzlich über Ausklinkungen 6 verfügt, die im äusseren Randbereich der Scheibe 1 angeordnet sind. Die Ausklinkungen 6 sind leicht federnd in Richtung der Anlagefläche der Scheibe mit dem zu befestigenden Bauteil gebogen. Ist die Unterlegscheibe 1 am zugehörigen Befestigungselement befestigt, und wird mit diesem ein Bauteil befestigt, so sorgen die in Richtung der Anlagefläche weisenden Ausklinkungen 6 für einen erhöhten Reibwert bei Berührung der Anlagefläche. Die Unterlegscheibe 1 bleibt gegenüber der Anlagefläche am zu befestigenden Bauteil stehen. Es wird dadurch vermieden, dass die Anlagefläche am Bauteil durch eine sich mit dem Befestigungselement 2 mitdrehende Scheibe 1 beschädigt und eine eventuell vorhandene Beschichtung zerstört wird, und blankes Metall in Berührung mit der Unterlegscheibe 1 gerät. Sind die Anlagefläche des zu verschraubenden Bauteils beispielsweise aus Aluminium und die Unterlegscheibe sowie das Befestigungselement aus Stahl, so ist der Reibbeiwert zwischen Stahl und Aluminium geringer als zwischen zwei Stahlbauteilen. Ein Mitdrehen der Scheibe 1 mit dem Befestigungselement 2 aus diesem Grunde kann durch die Ausklinkungen 6 wirksam verhindert werden.

Durch zunehmende Verspannung zwischen der Unterlegscheibe und der Anlagefläche während der Verschraubung werden die federnden Ausklinkungen 6 planiert. Die vollständige Anlagefläche zwischen der Scheibe und dem Bauteil kann ausgenutzt werden.

Fig. 5 zeigt ein weiteres Ausführungsbeispiel der erfindungsgemässen Unterlegscheibe 1, bei der zusätzlich zu den Ausklinkungen 6 Ausstanzungen 7 vorgesehen sind.

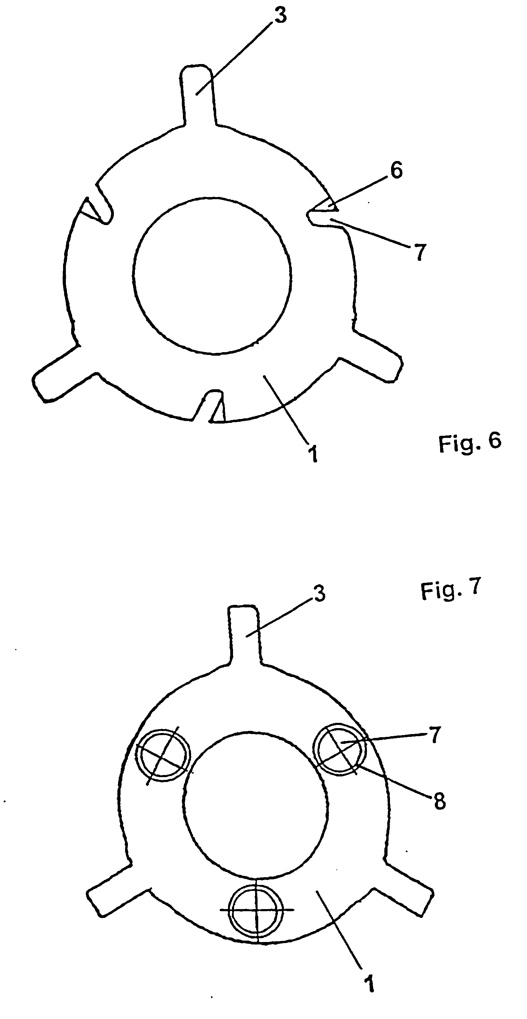

Fig. 6 zeigt ein weiteres Ausführungsbeispiel der erfindungsgemässen Unterlegscheibe 1, bei dem die Ausklinkungen 6 zur Erhöhung des Reibwertes sägezahnförmig ausgeführt sind.

Das in Fig. 7 dargestellte Ausführungsbeispiel der erfindungsgemässen Scheibe 1 weist im Bereich der Unterlegscheibe Ausstanzungen 7 auf, die in diesem Beispiel kreisförmig sind. Umlaufend um die kreisförmige Ausstanzung entsteht ein Grat 8 in Stanzrichtung, der wie die Ausklinkungen 6 in den Figuren 4, 5 und 6 wirkt.

Die erfindungsgemässe Scheibe 1 ist leicht herstellbar, da eine Ausstanzung der Scheibe einschliesslich Haltekrallen 3 möglich ist. Die Haltekrallen 3 können dann einfach um den Flansch 4 des Befestigungselementes 2 herumgelegt werden. Eine komplizierte Aufformung eines Ringstegs ist nicht mehr notwendig. Falls erforderlich kann die am Befestigungselement 2 befestigte Unterlegscheibe 1 leicht durch Aufbiegen der Haltekrallen 3 entfernt werden.

Ein weiterer entscheidender Vorteil der erfindungsgemässen Scheibe 1 liegt darin, dass eine Beschichtung der Scheibe auch im montierten Zustand auf dem Befestigungselement 2 möglich ist, ohne dass Anhäufungen des Beschichtungsmediums an der Baugruppe haften bleiben. Es ist möglich, das Beschichtungsmedium abzuschleudern, während bei der nach dem Stand der Technik bekannten Ausführungsform mit vollständig umlaufendem Ringsteg immer Materialreste zwischen dem Flansch des Befestigungselements und dem Ringsteg verblieben, die nicht abgeschleudert werden können, ist dies bei der erfindungsgemässen Scheibe nicht mehr der Fall.

Ausserdem kann der äussere Biegeradius der Haltekrallen 3 kleiner als bei einem geschlossenem Ring gewählt werden, so dass bei gleichen Platzverhältnissen grössere Anlagenflächen ermöglicht werden.

## Patentansprüche

1. Befestigungselement (2) mit unverlierbar daran befestigbarer Unterlegscheibe (1), das an seiner der Unterlegscheibe (1) zugewandten Seite mit einem umlaufenden Ringflansch (4) versehen ist, wobei die Unterlegscheibe (1) mit mindestens zwei angeformten Haltekrallen (3) versehen ist, die um den Flansch (4) umlegbar sind, **dadurch gekennzeichnet, dass** innerhalb der Unterlegscheibe (1) eine oder mehrere Ausstanzungen (7), insbesondere kreisförmige oder ovale Ausstanzungen, vorgesehen sind.

2. Befestigungselement nach Anspruch 1, **dadurch gekennzeichnet, dass** die Haltekrallen (3) am äußeren Rand (5) der Unterlegscheibe (1) angeformt sind.

3. Befestigungselement nach Anspruch 1 oder 2, **dadurch gekennzeichnet, dass** der Biegebereich (9) der Haltekrallen (3) innerhalb des Scheibenradius der Unterlegscheibe (1) liegt.

4. Befestigungselement nach einem der Ansprüche 1 bis 3, **dadurch gekennzeichnet, dass** die Ausstanzungen (7) von einem vor dem Befestigungselement (2) weggerichteten Grat (8) umgeben sind.

## Claims

1. Fastening element (2) with an attachable captive washer (1) having on the side facing the washer (1) an circumferential annular flange (4), wherein the washer (1) is provided with at least two unitarily formed holding claws (3) which can be bent around the flange (4), **characterised in that** within the washer (1) there are provided one or more punch-outs (7), especially annular or oval punch-outs.

2. Fastening element according to claim 1, **characterised in that** the holding claws (3) are formed at the outer margin (5) of the washer (1).

3. Fastening element according to claim 1 or 2, **characterised in that** the bending area (9) of the holding claws (3) is positioned within the radius of the washer (1).

4. Fastening element according to any of the claims 1 to 3, **characterised in that** the punch-outs (7) are surrounded by a flash (8) directed away from the fastening element (2).

## Revendications

1. Elément de fixation (2) avec rondelle (1) pouvant être fixée sur celui-ci de manière imperdable, qui est pourvu, sur son côté tourné vers la rondelle (1), d'une bride annulaire (4) périphérique, la rondelle (1) étant pourvue d'au moins deux griffes de retenue (3) rapportées, qui peuvent être repliées autour de la bride (4), **caractérisé en ce qu'**à l'intérieur de la rondelle (1) sont prévues une ou plusieurs découpes (7), en particulier des découpes circulaires ou ovales.

2. Elément de fixation selon la revendication 1, **caractérisé en ce que** les griffes de retenue (3) sont formées rapportées sur le bord extérieur (5) de la rondelle (1).

3. Elément de fixation selon la revendication 1 ou 2, **caractérisé en ce que** la zone de pliage (9) des griffes de retenue (3) se situe à l'intérieur du rayon de la rondelle (1).

4. Elément de fixation selon l'une des revendications 1 à 3, **caractérisé en ce que** les découpes (7) sont entourées par une bavure (8) de l'élément de fixation (2).
